# EUROPEAN PATENT APPLICATION

(11) **EP 1 413 614 A1**
(43) Date of publication of application: **28.04.2004**
(21) Application number: 03023274.8
(22) Date of filing: 14.10.2003
(51) Int. Cl.: C09H 3/00, A23J 1/04, A23L 1/0562, A23J 3/06, A23L 1/305, A23L 1/236, A23L 1/304, A23L 1/22

(54) **Method for producing fish gelatin peptide**

(30) Priority: 22.10.2002 JP 2002306711
(71) Applicant: NIPPON SUISAN KAISHA, LTD., Tokyo (JP)
(72) Inventor: Kawahara, Hiroyuki, Nippon Suisan Kaisha, Ltd., Hachioji-shi Tokyo (JP); Tanihata, Takayuki, Nippon Suisan Kaisha, Ltd., Hachioji-shi Tokyo (JP)
(74) Representative: VOSSIUS & PARTNER

(57) **Abstract**

A method for producing gelatin peptide comprises the steps of cleaning fish skin with 0.1-5% salt water and fresh water, obtaining an extract from the fish skin using fresh water in neutral pH at 50-100°C, subjecting the water phase to enzymatic digestion, concentrating solution of the digest, activated carbon treatment of the concentrated solution of the digest, and drying the yield. The concentration of salt in the salt water used as cleaning water is preferably 0.5-2%. The fish skin is preferably from white meat fish. The fish skin from pollack such as Alaskan pollack or Pacific cod is particularly preferred. This method enables one to obtain, from fish skin, gelatin peptide from which fish odor is sufficiently eliminated by utilizing simplified processes to be executed under easily adjustable conditions.

## Description

The present invention relates to a method for producing fish gelatin peptide.

Water-soluble molecules obtained by heating collagen, which is a protein widely distributed in animal tissues, are called gelatin, and have been utilized as a material in many industrial products including medicines and foodstuffs. An aqueous solution of gelatin readily gells or solidifies when kept at a low temperature. When gelatin is used in applications that utilize the gelling tendency of gelatin, it is desirable for the gelatin to have a high molecular weight. However, if gelatin is to be added, for example, to beverages, such a gelling tendency is undesirable. In order to obtain gelatin or gelatin decomposition products which retain the nutritional value of collagen or gelatin but are low in viscosity or have scarcely any gelling tendency even when kept at a low temperature, it is necessary to partially hydrolyze the gelatin to produce hydrolysates with a low molecular weight. Such low molecular weight hydrolysates of gelatin are called collagen peptide or gelatin peptide.

The term "gelatin peptide" used herein refers to peptides obtained by partially hydrolyzing gelatin using an enzyme or the like such that the resulting hydrolysates or peptides have an average molecular weight as low as several thousand and are readily soluble in water.

When gelatin is extracted from animal tissues, it is customary according to conventional techniques to subject the tissues to pretreatment using alkali or acid. This prevents invasion of the tissues by foreign contaminants and helps to improve the extraction efficiency. However, in many cases, the pretreatment takes a long time and requires cumbersome handling. If the skin of a land animal is used, the pretreatment often consists of immersing the skin in a diluted acid solution. By virtue of this treatment, tissues of the skin soften, and expand by absorbing fluid, which improves the extraction efficiency.

The same effect is also observed when fish skin is used instead of the skin of a land animal. However, fish generally have a shorter life than land animals, and thus grow more rapidly than land animals. Hence, the tissues of fish skin are not as complex in structure as those of land animal skin. Thus, as far as fish skin is concerned, omitting the pretreatment does not always lead to a lowered extraction efficiency. Moreover, if animal skin is pretreated using acid, some acid will remain in the skin, even if the skin is thoroughly washed after the pretreatment. Thus, even if fresh water is used for extraction, extraction occurs under a more or less acidic condition. Therefore, the extract will contain not only collagen-derived components but also undesirable components derived from proteins other than collagen. Elimination of such undesirable components will require purification treatment, for example, treatment in which a chelating agent is added to the extract to selectively precipitate the undesirable components for removal. Furthermore, if fish tissues are used as a material, the gelatin product prepared therefrom will have an odor characteristic of fish tissue unless specifically treated to remove the odor, and such a product will not be suitable for food product applications.

Non-patent document 1 (Japanese) describes a general method for preparing gelatin from animal tissues (alkali treatment-water wash-neutralization-water wash-extraction-filtration-concentration-cutting-drying).

Non-patent document 2 titled "Analysis and development of gelatin/collagen-derived food materials (Japanese)" describes the effects of alkali treatment on collagen as follows. When pig or fish dermis is heated after alkali pretreatment, the resulting gelatin becomes soluble in water comparatively easily, and thus it is possible to obtain soluble gelatin by directly exposing the washed material to an acid solution. Alkali treatment of cattle dermis includes the use of an aqueous solution of sodium hydroxide or lime because it improves the extraction efficiency.

Non-patent document 3 titled "Exploitation of collagen as a food material and its prospects (Japanese)" describes the manufacture of gelatin in which pretreatment consists of exposing collagen to acid or alkali. Generally, pretreatment adopted for cattle tissues consists of immersing the tissue material in an alkali solution such as an aqueous solution of slated lime for two to three months, while pig tissues require acidic pretreatment which consists of immersing the tissue material in diluted hydrochloric acid for several hours. It also describes the production of collagen peptide: the starting material includes gelatin, generally alkali-treated gelatin or acid-treated gelatin. Hydrolysis of the material is achieved by exposing the material to acid such as hydrochloric acid or to a proteolytic enzyme.

Non-patent document 4 titled "Exploitation of gelatin as a food material and its prospects (Japanese)" describes a method of producing gelatin as follows. To efficiently extract high quality gelatin from a collagen material, it is necessary to subject the material to pretreatment using an acid solution or an aqueous solution of lime. After pretreatment, the material is thoroughly washed with water, to remove superfluous acid or alkali. The resulting compound is warmed with warm water to extract gelatin therefrom.
List of non-patent documents
Non-patent document 1: Protein Chemistry 3, pp. 453-463, Kyoritsu Publishing Co. (1955)
Non-patent document 2: Food Processing Technology, vol. 21, No. 1, pp. 16-21(2001)
Non-patent document 3: Food Processing Technology, vol. 21, No. 1, pp. 22-27(2001)
Non-patent document 4: Food Processing Technology, vol. 21, No. 1, pp. 28-33(2001)

Although gelatin peptide has been widely used as a health food material as well as in food generally, consumers currently tend to avoid food containing gelatin peptide prepared from cattle, largely due to fears caused by recent outbreaks of bovine spongiform encephalopathy (BSE). The consumers' predilection is shifting towards food containing gelatin peptide prepared from pigs or fish. However, since fish-derived products have a characteristic odor (fish odor), they have not been popular with consumers. If it were possible to solve this problem inherent to fish-derived food, the fish-derived food would become as valuable as food containing gelatin peptide derived from land animals.

In view of this, the object of the present invention is to provide a method for producing gelatin peptide from fish skin, which enables significant elimination of the characteristic fish odor from gelatin peptide by utilizing more simplified steps than those used in a corresponding conventional method.

The essence of the invention is to provide a method for producing fish gelatin peptide comprising the steps of cleaning a fish skin with 0.1-5% salt water and fresh water, extracting gelatin from the fish skin with neutral fresh water at 50-100°C, subjecting the extract to enzymatic digestion, concentrating the digested solution, treating the concentrated solution with activated carbon, and drying the resulting compound. The concentration of salt in the salt water is preferably 0.5-2%. The fish skin is preferably obtained from white meat fish. Particularly fish skin from pollack such as Alaskan pollack or Pacific cod is preferred.

The fish skin may be obtained as a by-product when fish meat is processed into fillets. The term "fresh water" used herein refers to common water such as tap water or purified water. The term "neutral fresh water" used herein refers to water whose pH is not deliberately adjusted to acidity or alkalinity, and includes tap water and purified water whose pH is close to neutral.

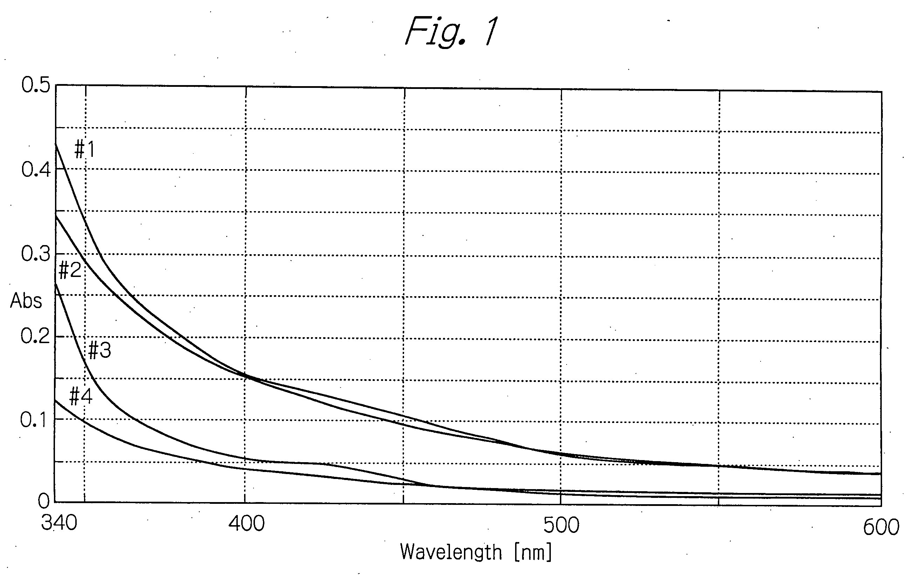

Fig. 1 shows the absorption spectra of 10% solutions of gelatin peptide preparations obtained in Example 3 (#1, #2, #3 and #4 correspond to the gelatin peptide preparations obtained under conditions 1, 2, 3 and 4, respectively).

In order to obtain, from fish skin, a gelatin product which is light in color, and has a significantly reduced fish odor, it is important to carry out the steps of pretreatment, i.e. cleaning a fish skin, and treatment with activated carbon exactly in the way and in the order indicated in this Specification. The pretreatment must include washing with diluted salt water. Preferably, the starting material or fish skin is washed two times or more with 0.1-5% salt water, and then two times or more with fresh water in a similar manner. More preferably, the starting material is washed two times or more with 0.5-2% salt water, and then with fresh water in a similar manner. Then fish gelatin is extracted from pretreated fish skin with equal to ten times volume of fresh water to fish skin in neutral pH. Extraction using fresh water in neutral pH significantly reduces the risk of concomitant extraction of other undesirable proteins. Thus, a clarification process may be omitted. The temperature for extraction is not limited to any specific range, as long as it is kept equal to or higher than 50°C. However, extraction preferably occurs at 60-100°C for 1-5 hours. Although a single extraction gives a good result, extraction may be repeated two or more times after exchanging used extraction water for fresh water at each extraction. Such repeated extraction is expected to improve the yield. The extract may contain a large amount of oil depending on the kind of fish used as the starting material. In that case, it is necessary to subject the extract to centrifugation in order to remove the oil from the extract. However, this process may be omitted when the fish used as the starting material contains only a small amount of oil. Preferably, skin from white meat fish, specifically skin from pollack such as Alaskan pollack or Pacific cod is used as the starting material. Then, it is possible to obtain an extract which does not need to be centrifuged in order to remove excess oil. Preferably, insoluble materials suspended in the extract should be removed as much as possible. For this purpose, filtration using a filter chosen from a variety of filters, or centrifugation may be employed.

Then, the yield is digested by an enzyme. The enzyme is not limited to any specific one, as long as it can cleave the backbone of the proteins. However, an endoprotease is preferably employed. The amount added, digestion temperature and digestion time vary depending on the enzyme used, and these digestion conditions may be adjusted in accordance with the molecular weight of the target peptides. After enzymatic digestion, a process is introduced to inactivate the enzyme. For this purpose, it is convenient to employ an enzyme which is inactivated when heated. After enzyme inactivation, the resulting peptide solution is concentrated. The method for concentration is not limited to any specific one. However, eliminating the water content of the peptide solution by heating under a reduced pressure is preferable because it is generally easy to apply.

Next, the concentrated peptide is treated with activated carbon. Preferably, activated carbon treatment is achieved by adding powdery activated carbon to the concentrated peptide solution and stirring the mixture for a specified period, or by passing the concentrated peptide solution through a column filled with activated carbon. Drying the product is achieved by a method appropriately chosen according to the property required for the product. If a powdery product is desired, drying is preferably achieved by freeze-drying or spray-drying. The above-described steps are essential for the method of the invention. However, additional steps such as ion exchange for removing electrolytes, sterilization, etc., may be introduced as needed. By this method it is possible to obtain white gelatin peptide essentially devoid of fish odor, which, when dissolved in water, gives a colorless, clear solution.

The yield according to the method of the invention, although it varies depending on the extraction temperature and time, and number of extractions, is approximately equal to or higher than that of a corresponding conventional extraction method.

### Examples

The invention applied herein will be detailed below with reference to examples. However, it should be understood that the invention is not limited in any way to these examples.

### EXAMPLE 1

### Screening of various pretreatments

About 5 g of Alaskan pollack skin was immersed in 50 ml of each one of the cleaning solutions as listed in Table 1 at room temperature for one hour, the cleaning solution was removed, and the skin was washed with water and then freeze-dried. The skin preparation was tested for its fish odor by simply smelling the sample. The evaluation results of the fish odor for various skin preparations were compared in terms of the cleaning solutions with which they had been washed, and the results are shown in Table 1 (the skin preparations were classified according to the fish odor they exhibited into the following categories: trace fish odor (+), slight fish odor (++), and notable fish odor (+++)).

**Table 1**

| Cleaning solution | Evaluation result |
|---|---|
| No cleaning | +++ |
| Water | + |
| 0.5% salt water | + |
| 1.0% salt water | + |
| 5.0% salt water | ++ |
| 10% salt water | +++ |
| 20% salt water | +++ |
| 0.1N NaOH | ++ |
| 0.1N HCl | +++ |

These results were taken as primary test results, and the skin preparations that gave good results in the primary test were selected for the succeeding test. For each of the skin preparations thus selected, extraction was achieved by immersing it in 50 ml of water at 60°C for one hour, and then the extract was freeze-dried to give a gelatin preparation. Each of the gelatin preparations was subjected to the secondary test in the same manner as in the primary test (the gelatin preparations were classified according to the fish odor they exhibited into the following categories: trace fish odor (+) and slight fish odor (++)).

Inspection of Table 2 shows that diluted salt water such as 0.5 or 1.0% salt water is suitable as a cleaning solution for the pretreatment.

**Table 2**

| Cleaning solution | Evaluation result |
|---|---|
| Water | ++ |
| 0.5% Salt water | + |
| 1.0% Salt water | + |

### EXAMPLE 2

### Preparation of gelatin peptide from Alaskan pollack skin

A 100 g sample of Alaskan pollack skin was washed with 1 1 of a 1.0% aqueous solution of NaCl, 0.5 1 of a 1.0% aqueous solution of NaCl, 0.5 1 of water, and 0.5 1 of water in this order. Extraction was achieved by immersing the washed skin in 300 ml of water at 60°C for one hour. The liquid extract was filtered, and 0.1 ml of alkalase (Novo Nordisk) was added to the filtrate and the mixture was incubated at 60°C for 1.5 hours to obtain low molecular weight peptides. After enzyme digestion, the mixture was boiled for ten minutes to inactivate the enzyme. Precipitates in the sample solution thus obtained were removed by centrifugation and the solution was concentrated under reduced pressure. To the concentrate was added 1 g of activated carbon, and the mixture was stirred at room temperature for one hour and filtered by aspiration to remove the activated carbon. The filtrate was freeze-dried to give gelatin peptide. The gelatin peptide obtained weighed 8.0 g (yield being about 8%).

### EXAMPLE 3

### Comparison of pretreatments with or without exposure to activated carbon in terms of the quality of the product

Skin samples were processed under the following conditions, and gelatin peptide products obtained therefrom were compared in terms of their quality.
Condition 1: no washing of the skin sample and no activated carbon treatment
Condition 2: washing of the skin sample (with 1% salt water and water), and no activated carbon treatment
Condition 3: no washing of the skin sample, but with activated carbon treatment
Condition 4: washing of the skin sample (with 1% salt water and water) and activated carbon treatment

The skin samples were otherwise treated in the same manner as in Example 2. The gelatin peptide preparations obtained as described above were dissolved in water to give a 10% aqueous solution. The fish odor of the test solutions was evaluated by simply smelling the solutions, and their color by spectroscopy. The evaluation results of the test solutions with regard to their fish odor are shown in Table 3. (The test solutions were classified, according to their perceived odors, into the following categories: essentially no fish odor (±), trace fish odor (+), slight fish odor (++), and notable fish odor (+++)).

**Table 3**

| Condition | Evaluation |
|---|---|
| 1 | +++ |
| 2 | ++ |
| 3 | ++ |
| 4 | ± |

From inspection of the tabulated results it was found that application of either pretreatment or activated carbon treatment is similarly effective in eliminating fish odor but a combination of pretreatment and activated carbon exposure brings about such a highly significant effect that it essentially eliminates fish odor.

Fig. 1 shows the absorption spectra of 10% aqueous solutions of the gelatin peptide preparations. Comparison of the absorption spectra shown in Fig. 1 shows that the absorption of visible light decreases in order depending on whether the skin sample received no treatment, received only pretreatment, was only treated with activated carbon, or received pretreatment and activated carbon treatment. Namely, the pretreatment and activated carbon,treatment, when executed alone, were similarly effective in decreasing the absorption of visible light, but the combined execution of the two treatments was far more effective in decreasing the absorption of visible light than either one of the two treatments.

### EXAMPLE 4

### Preparing gelatin peptide from Alaskan pollack skin (scale up study)

A 1.5 kg sample of Alaskan pollack skin was washed with 10 l of a 1.0% aqueous solution of NaCl, 5 l of a 1.0% aqueous solution of NaCl, 5 l of water, and 5 l of water in this order. Extraction was achieved by immersing the washed skin in 4.5 l of water at 60°C for two hours. The liquid extract was filtered, and 1 ml of alkalase (Novo Nordisk) was added to the filtrate and the mixture was incubated at 60°C for 1.5 hours to obtain low molecular weight peptides. After enzyme digestion, the mixture was boiled for ten minutes to inactivate the enzyme. Precipitates in the sample solution were removed by centrifugation and the solution was concentrated under reduced pressure. To the concentrate was added 15 g of activated carbon, and the mixture was stirred at room temperature for one hour and filtered by aspiration to remove the activated carbon. The filtrate was spray-dried to give gelatin peptide. The gelatin peptide obtained weighed 72.8 g (yield being about 4.8%*).
(*The experiment was so small in scale that loss due to adherence of the powdery product to the inner wall of a drying device was considerable, which explains the reduced yield.)

### EXAMPLE 5

### Preparing gelatin peptide from southern blue whiting skin

A 1 kg sample of southern blue whiting skin was washed with 10 1 of a 1.0% aqueous solution of NaCl, 5 1 of a 1.0% aqueous solution of NaCl, 5 l of water, and 5 l of water in this order. Extraction was achieved by immersing the washed skin in 3 l of water at 60°C for one hour. The liquid extract was filtered, and 0.5 ml of alkalase (Novo Nordisk) was added to the filtrate and the mixture was incubated at 60°C for 1.5 hour to obtain low molecular weight peptides. After enzyme digestion, the mixture was boiled for ten minutes to inactivate the enzyme. Precipitates in the sample solution were removed by centrifugation and the solution was concentrated under reduced pressure. To the concentrate was added 10 g of activated carbon, and the mixture was stirred at room temperature for one hour and filtered by aspiration to remove the activated carbon. The filtrate was spray-dried to give gelatin peptide. The gelatin peptide obtained weighed 32.5 g (yield being about 3.3%*).
(*The experiment was so small in scale that loss due to adherence of the powdery product to the inner wall of a drying device was considerable, which explains the reduced yield.)

### EXAMPLE 6

### Preparing gelatin peptide from trout skin

A 100 g sample of trout skin was washed with 1 l of a 1.0% aqueous solution of NaCl, 0.5 l of a 1.0% aqueous solution of NaCl, 0.5 l of water, and 0.5 l of water in this order. Extraction was achieved by immersing the washed skin in 300 ml of water at 60°C for one hour. The oil phase was separated by centrifugation and discarded. The water phase was filtered, and 0.1 ml of alkalase (Novo Nordisk) was added to the filtrate and the mixture was incubated at 60°C for 1.5 hours to obtain low molecular weight peptides. After enzyme digestion, the mixture was boiled for ten minutes to inactivate the enzyme. Precipitates in the sample solution thus obtained were removed by centrifugation and the solution was concentrated under reduced pressure. To the concentrate was added 1 g of activated carbon, and the mixture was stirred at room temperature for one hour and filtered by aspiration to remove the activated carbon. The filtrate was freeze-dried to give gelatin peptide. The gelatin peptide obtained weighed 6.7 g (yield being about 6.7%).

### EXAMPLE 8

### Comparison of the product (Example 4) obtained by the method of the invention with corresponding commercial products (human sensation-based evaluation results)

The gelatin peptide product obtained in Example 4 was compared in quality with corresponding fish gelatin products provided by manufacturers A, B and C. Each gelatin peptide product was dissolved in water to give a 10% aqueous solution which was used for the test. The fish odor of the test solutions was evaluated by simply smelling the solutions, and their color by spectroscopy. The evaluation results of the test solutions are shown in Table 4. (The test solutions were classified, according to their perceived odors, into the following categories:
essentially no fish odor (±), trace fish odor (+), slight fish odor (++), and notable fish odor (+++), and they were also classified according to their color into the following categories: essentially no color (±), faintly colored (+), lightly colored (++), and markedly colored (+++)).

**Table 4**

| | Product of invention | Product of maker A | Product of maker B | Product of maker C |
|---|---|---|---|---|
| Fish odor | ±/+ | ++ | +++ | + |
| Color | ± | ± | ++ | ++ |

When the product of the invention was compared in terms of its fish odor and coloration with the corresponding commercial products, it was found that the gelatin peptide product obtained by the method of the invention is not inferior in any way with regard to both fish odor and coloration to the comparable commercial products, that is, the product of the invention generally exhibits a high quality.

According to the method of the invention, it is possible to obtain gelatin peptide from fish skin from which fish odor is sufficiently eliminated by utilizing simplified processes which consist of washing the skin with salt water and fresh water, obtaining an extract via fresh water in neutral pH, and activated carbon treatment of the extract. The method of the invention only comprises washing skin tissues with salt water and fresh water and obtaining an extract therefrom via fresh water in neutral pH, without using any acid or alkali which, unless disposed of properly treated, is harmful to the environment. All the processes necessary for execution of the method of the invention are so simple that it is possible to reduce the production cost.

## Claims

1. A method for producing fish gelatin peptide comprising the steps of:
cleaning a fish skin with 0.1-5% salt water and fresh water;
extracting gelatin from the fish skin with neutral fresh water at 50-100°C;
subjecting the extract to enzymatic digestion;
concentrating the digested solution;
treating the concentrated solution with activated carbon ; and
drying the resulting compound.

2. A method as described in Claim 1 for producing fish gelatin peptide wherein the salt water serving as cleaning water contains salt at 0.5-2%.

3. A method as described in Claim 1 or 2 for producing fish gelatin peptide wherein the fish skin is one derived from white meat fish.

4. A method as described in Claim 3 for producing fish gelatin peptide wherein the white meat fish comprises codfish or pollacks.
